Europäisches Patentamt

European Patent Office

Office européen des brevets

(11) Publication number: **0 312 190**
**A1**

## (12) EUROPEAN PATENT APPLICATION

(21) Application number: 88305668.1

(51) Int. Cl.⁴ **G02F 1/03** , **G02B 6/14**

(22) Date of filing: 21.06.88

(30) Priority: 10.10.87 GB 8723873

(43) Date of publication of application:
**19.04.89 Bulletin 89/16**

(84) Designated Contracting States:
**AT BE CH DE ES FR GB GR IT LI LU NL SE**

(71) Applicant: THE GENERAL ELECTRIC
COMPANY, p.l.c.
1 Stanhope Gate
London W1A 1EH(GB)

(72) Inventor: Parsons, Nicholas John
15 Chelmer Terrace The Downs
Maldon Essex(GB)

(74) Representative: Tolfree, Roger Keith
GEC p.l.c. Central Patent Department
Chelmsford Office Marconi Research Centre
West Hanningfield Road
Great Baddow Chelmsford Essex CM2
8HN(GB)

(54) **Electro-optic converter.**

(57) An electro-optic polarisation mode converter comprises a birefringent substrate defining a waveguide 12, and a chirped, interdigitated electrode (22) arranged along the waveguide, the chirp rate of the electrode being such that the relative delay imparted by the converter to two orthogonally-polarised optical waves (e.g. TE and TM polarised waves) is substantially temperature-independent.

FIG. 1.

EP 0 312 190 A1

## Electrc-Optic Converter

This invention relates to electro-optic converters for converting optical waves from one polarisation mode to an orthogonal polarisation mode, for example a TE-TM converter.

Such an electro-optic wave guide TE-TM mode converter is described in Alferness, RC, and Buhl, LL, "Electro-optic waveguide TE-TM mode converter with low drive voltage." OPT. LETT 5 (11), 473 (November 1980). The device has two limitations: firstly, it has a narrow temperature tolerance due to the temperature dependence of the substrate birefringence, and secondly it has a narrow optical bandwidth, this being a function of substrate birefringence and of the electrical efficiency required.

Accordingly, in a first aspect the invention provides an electro-optic polarisation mode converter comprising a birefringent substrate defining a length of waveguide, and a chirped, interdigitated electrode arranged along part of the waveguide, the chirp rate of the electrode being such, in relation to the temperature-dependent birefringence of the substrate with respect to two orthogonally-polarised optical waves, that the relative delay imparted by the converter to two such orthogonally-polarised optical waves is substantially temperature-independent.

The converter introduces a relative delay between orthogonally-polarised optical waves primarily due to the part of the waveguide which extends beyond the electrode, which is preferably substantially longer than the electrode, e.g. about ten times longer.

The use of a chirped interdigitated electrode gives the converter a much wider optical bandwidth. Such a structure operates in a manner similar to dispersive surface acoustic wave delay lines used in radar signal processing. By choosing a chirp rate such that the effective centre of conversion moves to maintain a constant relative delay between the two orthogonally-polarised optical waves, the temperature-dependence of the differential delay is removed.

In order to avoid fluctuations (Fresnel ripples) in the control voltage required for complete mode conversion, near the extremes of the operating range, the electrode is preferably longer, by substantially one active length, than the length required to achieve full conversion.

In a second aspect of the invention there is provided apparatus for controlling the phase of an amplitude-modulated input signal carried by a polarised optical wave, comprising a converter (22) according to any preceding claim for splitting the optical wave into two orthogonally-polarised components, means (21,12) for introducing between those components a relative delay corresponding to a shift in the phase of the amplitude- modulated signal, and means (23) for controlling the voltage applied to the electrode to select the amplitude ratio provided by the converter between the said components such that recombination of the orthogonally-polarised components yields an output signal carrying an amplitude-modulated signal of a desired phase shift relative to that of the input signal.

Preferably the means for introducing a relative delay comprises a birefringent medium (21) through which the two components travel.

In one embodiment the birefringent medium has a length such as to introduce a relative delay between the components of substantially one quarter of the period of amplitude modulation of the input signal.

The birefringent medium may include the substrate or comprise an optical fibre or a portion of an integrated optical device.

In order that the invention may be better understood, a preferred embodiment of the invention will now be described, by way of example only, with reference to the accompanying schematic drawings, of which:-

Figure 1 represents a TE-TM mode converter incorporating a chirped interdigitated electrode on a birefringent waveguide in accordance with the invention;

Figure 2 is a graph illustrating the relationship between substrate birefringence, wavelength and temperature; and

Figure 3 is a plan view of an integrated optic device including the converter of Figure 1.

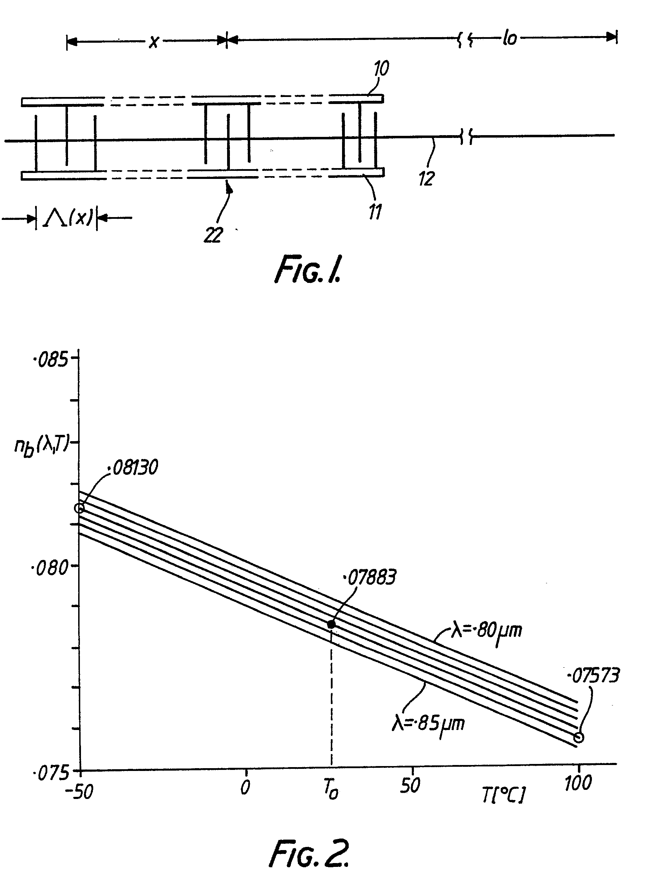

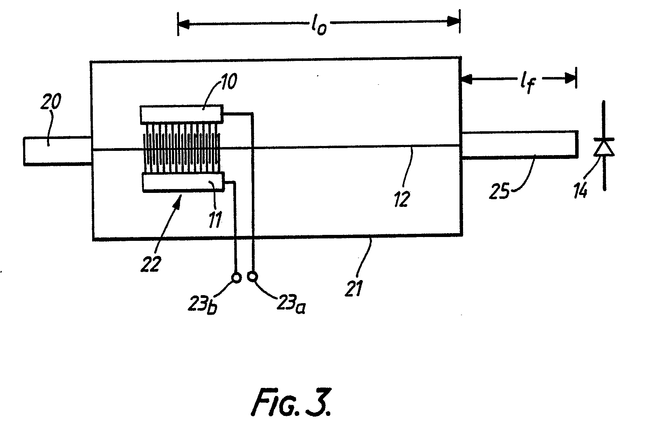

A TE-TM mode converter, as shown in Figure 1, comprises a straight optical waveguide 12 formed in the surface of a lithium niobate substrate 21 (Figure 3). A chirped interdigitated electrode 22, comprising two interdigitated elements 10, 11 connected to respective control voltage terminals 23a, 23b, is arranged along part of the waveguide 12. The electrode 22 is followed, on the same substrate 21, by a further length $l_0$ of the birefringent waveguide such that a differential delay $T_0$ is introduced between the two polarisations at a wavelength $\lambda_0$. The period of the electrode $\Lambda(x)$ is a linear function of the distance x along the waveguide, and its value at the centre of the electrode is $\Lambda_0$.

The differential delay t caused by a length l of optical waveguide is given by the relationship: $l = tc/n_b$ -

$(\lambda, T)$, where c is the velocity of light and the birefringence $n_b$ of the substrate is given by the relationship:

$$n_b = |n_o - n_e| = \lambda/\Lambda.$$

The chirped electrode is defined by its chirp period as follows:

$$\Lambda(x) = \Lambda_o + \Lambda'x = \lambda/n_b(\lambda, T)$$

(from the relationship given above), where $\Lambda'$ is the chirp rate.

The effective length l of the birefringent waveguide 12 is then obtained as:

$$l = l_o + x = l_o + (\lambda/n_b(\lambda,T) - \Lambda_o)/\Lambda'$$

Equating this with the relationship given above for the effective length l, and substituting for $l_o$ and $\Lambda_o$:

$$c\left[\frac{t}{n_b(\lambda,T)} - \frac{t_o}{n_b(\lambda_o,T_o)}\right] = \frac{1}{\Lambda'}\left[\frac{\lambda}{n_b(\lambda,T)} - \frac{\lambda_o}{n_b(\lambda_o,T_o)}\right]$$

By setting $t = t_o$, and $\lambda = \lambda_o$, and solving for the chirp rate:

$$\Lambda' = \lambda_o/t_o c$$

Substituting this value back into the equation given immediately above, the delay t is now found to be dependent only upon the wavelength:

$$t = t_o n_b(\lambda,T)\left[\frac{\lambda}{\lambda_o n_b(\lambda,T)} - \frac{1}{n_b(\lambda_o,T_o)} + \frac{1}{n_b(\lambda_o,T_o)}\right]$$

$$= t_o \frac{\lambda}{\lambda_o}$$

As disclosed in the paper by Alferness, R.C. quoted above, the voltage $v_\pi$ required for complete conversion is given by:

$$V_\pi = \lambda d/2\alpha n^3 r \, l\alpha)$$

where the electrode separation $d = \Lambda(x)4, \alpha$ is a measure of the overlap between electric field and guided modes, n is the refractive index of the waveguide, and $r = r_{51}$, the appropriate component of the electro-optic tensor. The active length $l\alpha$ is obtained by analogy with surface-acoustic-wave dispersive filters, where it is defined as:

$$l\alpha = |d\gamma/dx|^{-\frac{1}{2}}$$

where $\gamma$ is the spatial frequency of the interdigitated transducer, and is equal to $l/\Lambda(x)$. Thus:

$$l\alpha = \Lambda(x)/\sqrt{\Lambda'}$$

and therefore:

$$V_\pi = \frac{\lambda}{8 \alpha\, n^3 r} \cdot \sqrt{\frac{\lambda_o}{t_o c}}$$

The drive voltage is thus independent of substrate birefringence, although it is dependent upon changes in source wavelength and substrate refractive index.

In the present example, in which the waveguide is of lithium niobate, the variation of birefringence $n_b$ with wavelength $\lambda$ and temperature T is determined from temperature-dependent Sellmeier equations given in: Edwards, G.J. and Lawrence, M, "A temperature-dependent dispersion equation for congruently grown lithium niobate." Opt. and Quant. Elec. 16 (4), 373 (July 1984), as illustrated in the graphs of Figure 2. Designing for a differential delay $t_o$ of 30 $\overline{\text{ps}}$ with a wavelength $\lambda_o$ = 0.83 micrometres +/- 0.1 micrometres, for a temperature range of T from -50 °C to 100 °C, the beat length $\Lambda$ varies between 10.09 micrometres ( $\lambda$ = 0.82 micrometres) and 11.09 micrometres ($\lambda$ = 0.84 micrometres). At $T_o$ = 25 °C, $\Lambda_o$ = 10.53 micrometres. Over the same range, the length I of birefringent waveguide required varies between 11.07 cm and 11.88 cm. The chirp rate $\Lambda'$ is thus 9.22 x $10^{-5}$, and the mean active length I$\alpha$ = 1.10 mm. Using the equations given above for the voltage $v_\pi$, the voltage required in this design for complete conversion is $v_\pi$ = 30.8 volts.

To avoid fluctuations (Fresnel ripples) in this voltage near the extremes of the operating range, the chirp transducer needs to continue beyond the length required by about one active length I$\alpha$, resulting in an overall transducer (electrode) length of 12 mm and an overall converter length of 12 cm. Thus, in this example, the number of active lengths of the electrode is 11, but this number could be between, say, 5 and 50. The width and thickness of the device would be typically 1 mm x 1 mm.

The electrical bandwidth of such a device is of the order of 100 MHz, limited by the capacitance of the electrode structure.

As shown in Figure 3, the electro-optic device 22 and the following birefringent waveguide of length $I_o$ are preferably formed on the same substrate 21 of lithium niobate. By way of example, light may be input through an optical fibre 20 and output through a further optical fibre 25 to a detector 14 which sums the intensities of the optical waves in the two orthogonal modes. The electrodes 10 and 11 of the electro-optic device are connected to a control voltage source 23a and 23b. The input optical fibre 20 is such as to provide light of a defined polarization, e.g. TE or TM, whereas the output optical fibre is preferably isotropic, i.e. it has no birefringence.

## Claims

1. An electro-optic polarisation mode converter comprising a birefringent substrate (21) defining a length of waveguide, and a chirped, interdigitated electrode (22) arranged along part of the waveguide, the chirp rate of the electrode being such, in relation to the temperature-dependent birefringence of the substrate with respect to two orthogonally-polarised optical waves, that the relative delay imparted by the converter to two such orthogonally-polarised optical waves is substantially temperature-independent.

2. A converter according to claim 1, wherein the electrode is longer, by substantially one active length, than the length required to achieve full conversion between the two orthogonal polarisation modes over the temperature and wavelength ranges required.

3. A converter according to claim 1 or 2, wherein the mean active length of the electrode is substantially 1mm.

4. A converter according to any preceding claim, wherein the number of active lengths of the electrode is between 5 and 50.

5. A converter according to any preceding claim, wherein the length of waveguide beyond the electrode is of the order of ten times longer than the electrode.

6. A converter according to any preceding claim, wherein the substrate is of lithium niobate.

7. A converter according to any preceding claim, wherein the electrode is arranged along only one such substrate.

8. A converter according to any preceding claim, comprising means (23) for applying a variable control voltage to the electrode.

9. Apparatus for controlling the phase of an amplitude-modulated input signal carried by a polarised optical wave, comprising a converter (22) according to any preceding claim for splitting the optical wave into two orthogonally-polarised components, means (21,12) for introducing between those components a relative delay corresponding to a shift in the phase of the amplitude-modulated signal, and means (23) for controlling the voltage applied to the electrode to select the amplitude ratio provided by the converter between the said components such that recombination of the orthogonally-polarised components yields an output signal carrying an amplitude-modulated signal of a desired phase shift relative to that of the input signal.

10. Apparatus according to claim 9, wherein the means for introducing a relative delay comprises a birefringent medium (21) through which the two components travel.

11. Apparatus according to claim 10, wherein the birefringent medium has a length such as to introduce a relative delay between the components of substantially one quarter of the period of amplitude modulation of the input signal.

12. Apparatus according to claim 10 or 11 , wherein the birefringent medium comprises an optical fibre or a portion of an intergrated optical device.

13. Apparatus according to any of claims 10 to 12, wherein the birefringent medium includes the said substrate.

FIG. 1.

FIG. 2.

FIG. 3.

## DOCUMENTS CONSIDERED TO BE RELEVANT

EP 88305668.1

| Category | Citation of document with indication, where appropriate, of relevant passages | Relevant to claim | CLASSIFICATION OF THE APPLICATION (Int. Cl.4) |
|---|---|---|---|
| Y | GB - A - 2 171 532 (STC) <br><br> * Page 1, lines 24-40; page 1, line 49 - page 2, line 27; fig. 1,2 * | 1,6-10, 12,13 | G 02 F 1/03 <br><br> G 02 B 6/14 |
| A | | 2,5,11 | |
| | -- | | |
| Y | US - A - 4 387 343 (KONDO) <br><br> * Column 2, line 59 - column 3, line 32; column 5, line 20 - column 8, line 19 * | 1,6-10, 12,13 | |
| | -- | | |
| D,A | OPTICS LETTERS, vol. 5, no. 11, November 1980 <br><br> R.C. ALFERNESS et al. "Electro-optic waveguide TE↔TM mode converter with low drive voltage" pages 473-475 <br><br> * Totality * | 1,6-8 | |
| | | | **TECHNICAL FIELDS SEARCHED (Int. Cl.4)** |
| | -- | | G 02 F |
| A | US - A - 4 691 984 (THANIYAVARN) <br><br> * Abstract; fig. 3; column 1, line 54 - column 2, line 11 * | 1,9 | G 02 B |
| | ---- | | |

The present search report has been drawn up for all claims

| Place of search | Date of completion of the search | Examiner |
|---|---|---|
| VIENNA | 08-02-1989 | GRONAU |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82